# EUROPEAN PATENT APPLICATION

(11) **EP 1 235 158 A1**
(43) Date of publication of application: **28.08.2002**
(21) Application number: 00969944.8
(22) Date of filing: 20.10.2000
(51) Int. Cl.: G06F 17/30, G06F 13/00

(54) **NETWORK ADVERTISEMENT METHOD AND SYSTEM**

(30) Priority: 21.10.1999 JP 29895799; 21.03.2000 JP 2000079182; 21.03.2000 JP 2000079184; 03.08.2000 JP 2000000052
(71) Applicant: Visionarts, Inc., Tokyo 104-0033 (JP); Sony Corporation, Tokyo 141-0001 (JP)
(72) Inventor: FUJITA, Takeshi, Visionarts, Inc., Chuo-ku, Tokyo 104-0033 (JP); ENDOH, Hitoshi, Visionarts, Inc., Chuo-ku, Tokyo 104-0033 (JP); HATTA, Nariaki, Visionarts, Inc., Chuo-ku, Tokyo 104-0033 (JP); FUJIKAWA, Yasufumi, Visionarts, Inc., Chuo-ku, Tokyo 104-0033 (JP)
(74) Representative: Turner, James Arthur
(86) International application number: JP0007325
(87) International publication number: WO01029706

(57) **Abstract**

An object of the present invention is to help a user easily acquire diverse information originated from advertisers, and to enable the advertisers to put highly effective advertisements.

For accomplishing the object, a server (20) for transmitting an advertising image file (5) and a terminal (30) for receiving the advertising image file (5) and presenting it to a user are interconnected over a network (10). The advertising image file (5) is an information-appended advertising image file (5) that contains in advance one pointer or a plurality of pointers with which a file (11) or files relevant to the advertisement can be located. When the information-appended advertising image file (5) is accessed after stored in a local file storage in the terminal (30), a request for transmission of the relevant file (11) is issued to an address indicated by the pointer of the relevant file (11) contained in the information-appended advertising image file (5). The relevant file (11) transmitted to the terminal (30) in response to the request is opened by the terminal (30).

## Description

### Technical Field

The present invention relates to a network advertisement method and system. In particular, the present invention is concerned with a network advertisement method and system for downloading an advertising image from a server to a terminal over a network.

### Background Art

When various kinds of websites are browsed on the Internet, so-called banner advertisements come into sight. What is referred to as a banner advertisement is an advertising image put at a website and having a link to an advertiser's site appended thereto. Even when the same website is accessed, a different advertising image and a different link are provided for each access. Moreover, even when the same Web page is displayed continuously, an advertising image and a link provided by a banner advertisement vary time-sequentially. When a user finds an interesting banner advertisement, the user clicks the banner advertisement to browse an advertiser's site. When the user thus accesses the advertiser's site, the banner advertisement has filled its expected role. Many banner advertisements are put at popular sites that are accessed quite frequently. An originator of a popular site charges advertisers for banner advertisements, and puts the banner advertisements. This kind of network advertisement business has rapidly prevailed. Many banner advertising agencies are in business on the Web.

Further, network advertisement modes include a mode in which a link-appended advertising image is put at a website on a fixed basis for a long period of time and a mode in which an advertising image is distributed while being appended to mails.

For presenting a link-appended advertising image on the Web, a tag for instructing presentation of a predetermined advertising image at a predetermined position and a tag for establishing a link from the advertising image to an advertiser's site are written in a Hyper Text Markup Language (HTML) file. The HTML file describes the contexts of Web pages.

However, a conventional banner advertisement does not fill its expected role unless a user who comes across the banner advertisement and accesses the banner advertisement. The banner advertisement is therefore an advertisement that is seldom clicked. The advertiser has been obliged to pay a charge for the advertisement that is seldom accessed.

On the other hand, when a user finds an interesting banner advertisement, if the user drags and drops the banner advertisement image into a local folder, the link provided by the banner advertisement is saved as a shortcut in the local folder. After a connection on a network is released, it is possible to access the advertiser of the banner advertisement. However, whatever banner advertisement is saved through a drag and drop, a shortcut produced in a local folder is expressed with the same icon, though a different filename is assigned to each text. Therefore, when a plurality of shortcuts is saved in a local folder, it is time-consuming to search a shortcut to an intended advertiser's site. Moreover, even when it says that a shortcut can be produced and saved in a local folder, it merely means that the Uniform Resource Location (URL) of a linked destination is saved as information. The shortcut has therefore a low value added thereto. The same applies to an advertising image put on a fixed base on the Web and an advertising image appended to mails.

An object of the present invention is to provide a network advertisement method and system capable of overcoming the foregoing disadvantages of the related art. In particular, the network advertisement method and system can provide users with higher value-added advertising images so that the users can easily access the diverse information originated from advertisers, and the advertisers can put highly-effective advertisements.

### Disclosure of Invention

(1) For accomplishing the above-described object, according to the present invention, there is provided an advertisement system constructed by interconnecting a server and a terminal over a network so that the server and terminal can communicate with each other. The server transmits an advertising image file. The terminal receives the advertising image file sent from the server and presents it to a user. Herein, the advertising image file is an information-appended advertising image file that contains one pointer or a plurality of pointers with which a file or files relevant to the advertisement can be located. When the advertising image file is accessed after stored in a local file storage in the terminal, a request for transmission of the relevant file to an address indicated by the pointer of the relevant file contained in the information-appended advertising image file. The relevant file transmitted to the terminal in response to the request is then opened.
   According to the present invention, a term "advertisement" is broadly interpreted as a meaning of making something publicly and generally known. Objects of advertisement are not limited to commodities or events (the same applies throughout the specification). A term "relevant file" refers to various kinds of files usable within applications that run in the terminal. The relevant file refers to files having filename extensions of, for example, .html, .pdf, .mp3, .doc, .xls, and .ppt. A "pointer" indicates the location of a relevant file. For example, when a relevant file resides in a file storage on the Internet, the URL of the relevant file is the pointer of the relevant file. When it says that a pointer is contained, the pointer may be contained in an available area in the advertising image file in terms of a file structure or may be contained using electronic watermark technologies. Otherwise, the pointer may be appended to the start or end of image data itself. Moreover, a plurality of pointers may be encrypted or compressed and then contained in the advertising image file. What is referred to as a "local file storage in the terminal" is a file storage usable by the terminal without networking. When it says that the "information-appended advertising image file is accessed," it may be interpreted that the image file, or to put it particularly, an image contained in the image file is clicked or double-clicked. Otherwise, selecting a job from a menu relevant to the image file may be interpreted as access to the image file. When it says that the "relevant file is opened in the terminal," the relevant file may be opened by a plug-in that is organized under a browser. Alternatively, an application other than the browser may sense reception of a relevant file and allocate the file to an application compatible with the relevant file. Thus, the relevant file may be opened. The server for transmitting the information-appended advertising image file and an apparatus for transmitting a relevant file need not be physically integrated with each other and not be interconnected locally. The same applies to the other aspects of the present invention to be described below.
(2) According to another aspect of the present invention, there is provided an advertisement system constructed by interconnecting a server and a terminal over a network so that the server and terminal can communicate with each other. The server transmits an advertising image file. The terminal receives the advertising image file sent from the server and presents the advertising image file to a user. Herein, the advertising image file is an information-appended advertising image file containing in advance one pointer or a plurality of pointers with which a file or files relevant to the advertisement can be located. The advertisement system also includes a relevant file requesting means and a relevant file opening means. The relevant file requesting means senses that the information-appended advertising image file is accessed after stored in a local file storage in the terminal. The relevant file requesting means then issues a request for transmission of the relevant file to an address indicated by the pointer of the relevant file contained in the information-appended advertising image file. The relevant file opening means opens the relevant file, which is transmitted to the terminal in response to the request, in the terminal.
(3) According to still another aspect of the present invention, there is provided a server having an advertising image transmitting means that transmits an advertising image file in response to a request issued from a terminal. The advertising image transmitting means transmits an information-appended image file that contains in advance one pointer or a plurality of pointers, with which a file or files relevant to the advertisement can be located, as an advertising image file. The relevant file of files comprise information with which the advertiser desires to provide a user of said terminal materialized into the form of a file.
(4) According to still another aspect of the present invention, there is provided a computer-readable medium in which an advertising image transmission program is recorded. The advertising image transmission program instructs a computer to transmit an advertising image file in response to a request issued from a terminal. In other words, the program instruct a computer to transmit an information-appended advertising image file as the advertising image file. The information-appended advertising image file contains in advance one pointer or a plurality of pointers with which a file or files relevant to the advertisement can be located. The relevant file or files comprise information with which the advertiser desires to provide a use of the terminal, materialized into the form of a file.
(5) According to still another aspect of the present invention, there is provided a terminal that presents an advertising image file to a user. The advertising image file is an information-appended advertising image file that contains in advance one pointer or a plurality of pointers with which a file or files relevant to the advertisement can be located. The terminal includes a relevant file requesting means and a relevant file opening means. The relevant file requesting means senses that the information-appended advertising image file is accessed after stored in a local file storage in the terminal. The relevant file requesting means issues a request for transmission of the relevant file to an address indicated by the pointer of the relevant file contained in the information-appended advertising image file. The relevant file opening means opens the relevant file, which is transmitted to the terminal in response to the request, in the terminal.
   According to the present invention, the information-appended advertising image file is not limited to a file to be received over a network. The information-appended advertising image file may be, for example, an information-appended advertising image file that is distributed while being stored in a medium such as a CD-ROM or a floppy disk. The same applies to the other aspects of the present invention to be described below.
(6) According to still another aspect of the present invention, there is provided a medium adaptable to a terminal that presents an advertising image file to a user. An advertising image management program is recorded in the medium. The advertising image management program instructs a computer to sense that the information-appended advertising image file is accessed after stored in a local file storage in the terminal, and to issue a request for transmission of a relevant file to an address indicated by the pointer of the relevant file contained in the information-appended advertising image file.
(7) According to still another aspect of the present invention, there is provided an advertising image file creator including a memory means, an input means, and a data processing means. An advertising image file is stored in the memory means. The input means is used to enter a pointer of a file relevant to the advertisement. The data processing means specifies the pointer of the relevant file, which is entered at the input means, in the advertising image file.
(8) According to still another aspect of the present invention, there is provided a medium adaptable to an advertising image file creator that includes a memory means and an input means. An advertising image file is stored in the memory means. The input means is used to enter a pointer of a file relevant to the advertisement. Herein, an information-appended advertising image file production program is stored in the medium. The information-appended advertising image file production program instructs a computer to execute data processing for specifying the pointer of the relevant file entered at the input means in the advertising image file.

Thus, the present invention attempts to accomplish the aforesaid object.

### Brief Description of Drawings

Fig. 1 is a block diagram showing an advertisement system in accordance with an embodiment of the present invention;
Fig. 2 is a block diagram showing the software configurations of a server and a terminal included in the embodiment shown in Fig. 1;
Fig. 3 is a first half of a flowchart describing actions to be performed in the embodiment shown in Fig. 1 and Fig. 2;
Fig. 4 is a second half of the flowchart describing the actions to be performed in the embodiment shown in Fig. 1 and Fig. 2;
Fig. 5 is a block diagram showing an information-appended advertising image file creator in accordance with another embodiment of the present invention;
Fig. 6 is a flowchart describing actions to be performed in the embodiment shown in Fig. 5;
Fig. 7 shows the structure of an information image file and a division in which image-related information is specified;
Fig. 8 shows an example of image-related information;
Fig. 9 is an explanatory diagram concerning selection of a menu item for acquiring a pointer;
Fig. 10 is an explanatory diagram concerning displaying of a caption;
Fig. 11 is an explanatory diagram concerning addition of an information image to be performed through a drag and drop from a menu;
Fig. 12 is an explanatory diagram concerning an example in which presentation of a first management field and presentation of a second management field are switched responsively to selection of a tab;
Fig. 13 is an explanatory diagram concerning an example in which the first management field and the second management field are presented simultaneously while being separated as different frames; and
Fig. 14 is an explanatory diagram concerning an example in which when an information image file in the first management field (HTML) is accessed, a new information image file is managed and displayed in the second management field (HTML) after the contents of the second management field (HTML) are updated.

### Best Mode for Carrying Out the Invention

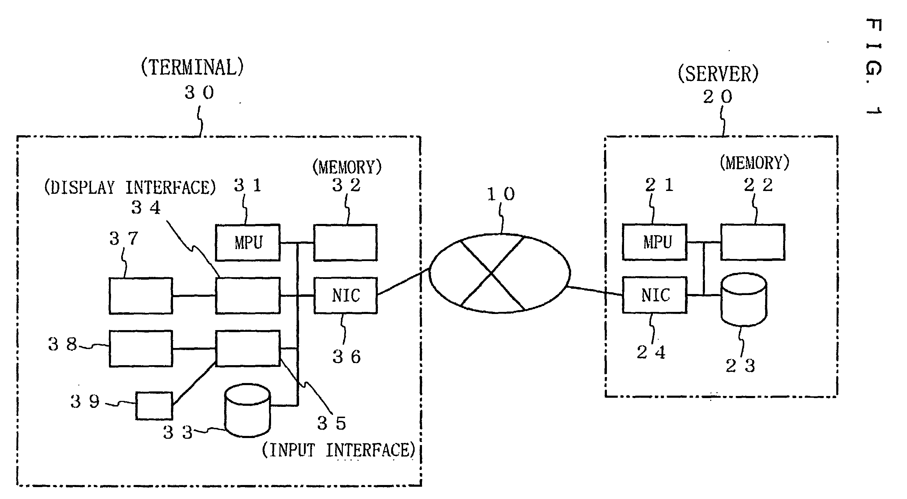

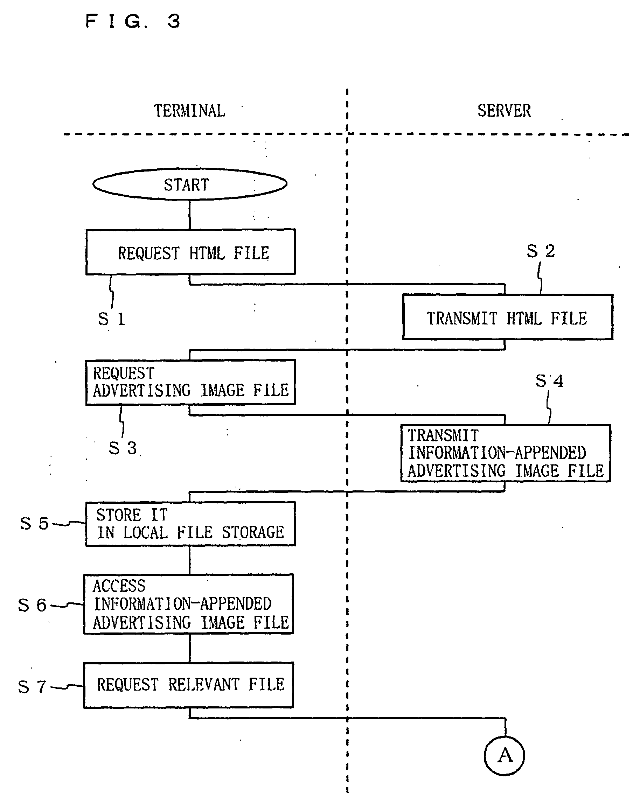

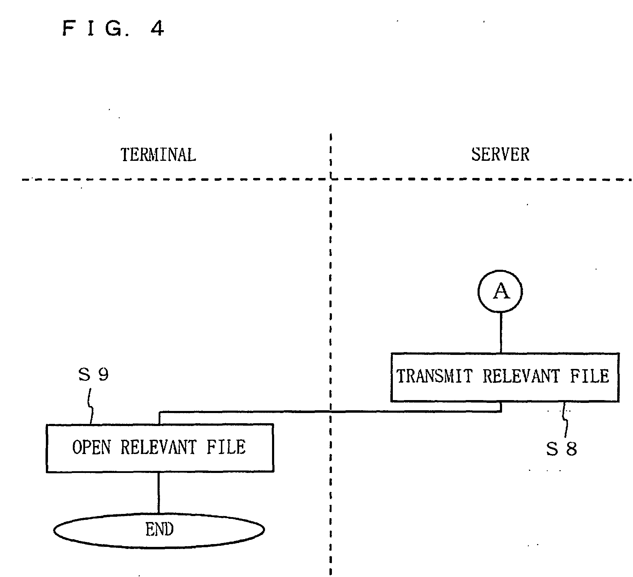

An embodiment of the present invention will be described with reference to Fig. 1 to Fig. 4. Fig. 1 is a block diagram showing the configuration of a network advertisement system in accordance with the present embodiment.

The network advertisement system includes a server 20 and a terminal 30 interconnected over a network 10 such as the Internet. Referring to Fig. 1, for brevity's sake, one server 20 and one terminal 30 are interconnected over the network 10. The numbers of servers 20 and terminals 30 are not restricted to any particular values.

The server 20 consists mainly of a microprocessor (MPU) 21, a memory 22, a hard disk drive (HDD) 23, and a network interface (NIC) 24. The hard disk drive 23 is used to store software including an operating system (OS) and an HTTP server, text data, and image data.

The terminal 30 consists mainly of a processor (MPU) 31, a memory 32, a hard disk drive (local file storage) 33, a display interface 34, an input interface 35, and a network interface (NIC) 36. The hard disk drive 33 is used to store an operating system (OS) and HTTP browsing software (Web browser).

A display device 37 is connected to the display interface 34. An OS job screen image and a Web browser display screen image are displayed on the screen of the display device 37. A keyboard 38 and a pointing device 39 such as a mouse are connected to the input interface 35. An instruction entered by a user is input through these pieces of peripheral equipment.

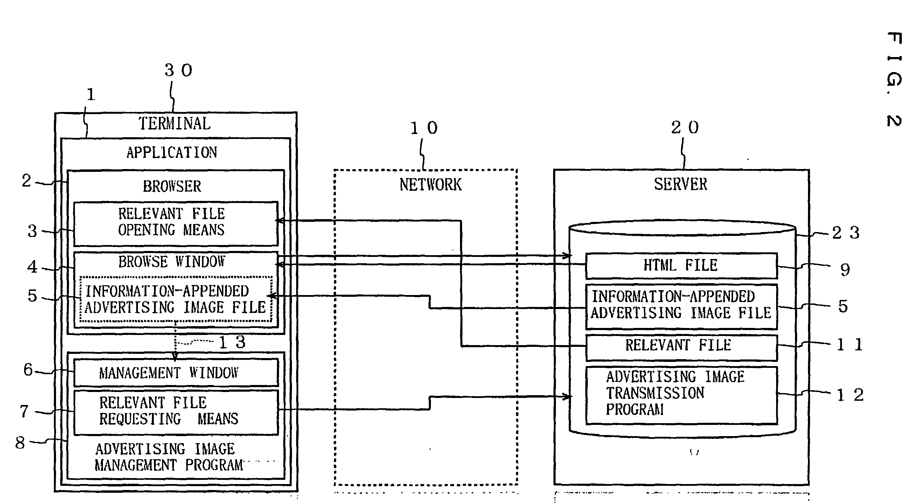

Fig. 2 is a block diagram showing the software configurations of the server 30 and terminal 20.

Stored in a file storage 23 included in the server are an HTML file 9, an information-appended advertising image file 5, a relevant file 11, and an advertising image transmission program. The HTML file 9 describes the contexts of Web pages. The information-appended advertising image file 5 is an advertising image file that contains the pointer of the relevant file 11. The relevant file 11 contains information relevant to the advertisement. The advertising image transmission program instructs a computer to transmit the information-appended advertising image file 5 to the terminal 30 in response to a request issued from the terminal 30.

The HTML file 9 is transmitted to the terminal 30 and opened by the browser 2 residing in the terminal 30. The HTML file 9 contains a tag that requests the server 20 to transmit the information-appended advertising image file 5 in the process of the HTML file 9 being opened. The information-appended advertising image file 5 looks like a typical advertising image file and has a filename with an extension of .jpg or .gif. However, as mentioned above, the information-appended advertising image file 5 contains one pointer or a plurality of pointers with which the relevant file 11 or files can be located. In the present embodiment, the information-appended advertising image file 5 has a plurality of pointers appended to the start or end of image data itself contained in the image file in terms of a file structure. At this time, the plurality of pointers is compressed (encrypted) and thus encapsulated. The relevant file 11 is a file of information which an advertiser wants to provide for the user of the terminal 30. The relevant file 11 includes various files executable by applications installed in the terminal 30. For example, the relevant file 11 includes an HTML file, a voice file, an image file, and a video file. The advertising image transmission program is run by the MPU 21 (computer) shown in Fig. 1. The MPU 21 functions as an advertising image transmitting means that transmits the information-appended advertising image file 5 to the terminal 30 in response to a request issued from the-terminal 30.

On the other hand, the terminal 30 has various applications 1 installed therein. In the present embodiment, the applications 1 include a browser 2 that enables viewing of an HTML file or the like, and an advertising image management program 8 that manages an information-appended advertising image file.

The browser 2 includes a browse window 4 and a relevant file opening means 3. The browse window 4 presents a context described in the HTML file 9 to a user using the display device 37. The relevant file opening means 3 hands the relevant file 11, which is downloaded from the server 20, to a plug-in, and allows the plug-in to open the relevant file 11.

The advertising image management program 8 visually displays the information-appended advertising image file 5, or to put it particularly, an advertising image contained in the file in the form of a thumbnail image. The advertising image management program 8 implements a management window 6 and a relevant file requesting means 7. The management window 6 enables a user to access the information-appended advertising image file 5. When the user accesses the information-appended advertising image file 5 managed in the management window 6, the relevant file requesting means 7 unfreezes (decrypts to restore) the pointer information of the relevant file 11 contained in the information-appended advertising image file 5. The relevant file requesting means 7 then issues a request for transmission of the relevant file 11 to an address or addresses indicated by the resultant one pointer or a plurality of pointers. The management window 6 is displayed on the display device 37 and thus presented to a user. The advertising image management program 8 is run by the MPU 31, thus implementing the above facilities.

Next, actions to be performed in the present embodiment will be described in conjunction with Fig. 1 to Fig. 4.

When a user activates the browser 2 in the terminal 30 and designates the URL of the HTML file 9, the browser 2 requests the server 20 to transmit the HTML file 9 (S1). In response to the request, the server 20 reads the HTML file 9 from the file storage 23 and transmits the HTML file to the terminal 30 (S2). The browser 2 in the terminal 30 having received the HTML file 9 starts displaying a Web page in the browse window 4 according to the description of the HTML file 9. When a tag described in the HTML file 9 requests the information-appended advertising image file 5, the browser 2 requests the server 20 to transmit the information-appended advertising image file 5 (S3). In response to the request, the server 20 reads the information-appended advertising image file 5 from the file storage 23 and transmits the file to the terminal 30 (S4). The browser 2 in the terminal 30 having received the information-appended advertising image file 5 displays the information-appended advertising image file 5, or to put it particularly, an image contained in the information-appended advertising image file 5, at a predetermined position in the browse window 4 according to the description of the HTML file 9. The user manipulates the pointing device 39 to designate the information-appended advertising image file 5 displayed in the browse window 4. The user then drags and drops 13 the information-appended advertising image file 5 into the management window 6 (see Fig. 2). When the information-appended advertising image file 5 is dropped into the management window 6, the advertising image management program 8 instructs the computer to display a thumbnail image of the image contained in the information-appended advertising image file 5 in the management window 6, and stores the information-appended advertising image file 5 in the local file storage 33 (S5). Thereafter, the user may release the path to the server 20 on the network.

Thereafter, the user accesses the information-appended advertising image file presented in the management window 6 whenever the user wants to do so (S6). When the information-appended advertising image file 5 is double-clicked using the pointing device 39, the advertising image management program 8 may recognize that the information-appended advertising image file 5 is accessed. Alternatively, when the information-appended advertising image file 5 is clicked using the pointing device 39, the advertising image management program 8 may display a predetermined menu. When a predetermined item is selected from the menu, the advertising image management program 8 may recognize that the information-appended advertising image file 5 is accessed.

When the relevant file requesting means 7 senses that the user has accessed the information-appended advertising image file 5 managed in the management window 6, the relevant file requesting means 7 unfreezes or restores the pointer information of the relevant file 11 that is contained in the information-appended advertising image file. The relevant file requesting means 7 then issues a request for transmission of the relevant file 11 to an address indicated by the pointer (S7). In the present embodiment, the pointer of the relevant file 11 specifies the location of the server 20 on a network, the pathname of the relevant file 11 in the file storage 23, or the filename of the relevant file 11. In response to the request for transmission of the relevant file 11, the server 20 reads the predetermined relevant file 11 such as an HTML file, a voice file, or a video file from the file storage 23, and transmits the relevant file to the terminal 30 (S8). The relevant file opening means 3 in the terminal 30 having received the relevant file 11 hands the relevant file 11 to a plug-in compatible with the kind of relevant file 11, and allows the plug-in to open the relevant file 11 (S9).

Consequently, the relevant file 11 which an advertiser has prepared in relation to the information-appended advertising image file 5 is opened. Various kinds of information the advertiser wants to provide for a user are visually and acoustically distributed to the user.

As mentioned above, according to the present embodiment, a pointer of a relevant file is contained in the advertising image file, and a higher value-added advertising image is provided for a user. Consequently, the user can easily acquire the diverse information originated from an advertiser. In addition, the advertiser can put a highly effective advertisement.

Moreover, when an advertising image that looks like a conventional one is merely dragged and dropped, a plurality of different kinds of information is stored in a local file storage in a terminal. A job is achieved efficiently. Moreover, a user's networking time can be shortened. This leads to a reduction in a load imposed on a network. Besides, a user can save a charge for dial-up and enjoy collecting advertising images as if the collecting were the user's hobby. Nevertheless, the advertising image is more certainly utilized by users than the conventional banner advertisement. Moreover, an advertiser can provide users with diverse information the advertiser wants to provide. Consequently, the advertisement system is cost-effective for the advertiser.

Moreover, when a Web page is produced, the position of an advertising image alone should be determined. Addition of a tag serving as a link to the advertising image is unnecessary. A burden that must be incurred in order to produce a Web page can be lightened. Moreover, a user can access an information-appended image stored in a local file storage at any time the user wants to do so, and would find this convenient. Conventionally, when a banner advertisement is dragged and dropped into a local file, a shortcut (bookmark) is created. Talking of this currently available technology, since only one icon is assigned to the shortcut, different links specified as shortcuts are therefore hard to distinguish. In contrast, the information-appended advertising image file employed in the present embodiment looks like an advertising image (though it may be enlarged or reduced) and can be managed as an advertising image. The information-appended advertising image file is so highly discernible as to be called a visual bookmark. An intended advertising image can be found at sight. In the future, the information-appended advertising image file employed in the present embodiment will be able to be adopted as a standard visual bookmark for browsers. Noted is that an advertising image itself conforms to an existing file structure to which a filename with an extension of .jpg or .gif is assigned and that the information-appended advertising image file can be easily introduced into existing systems.

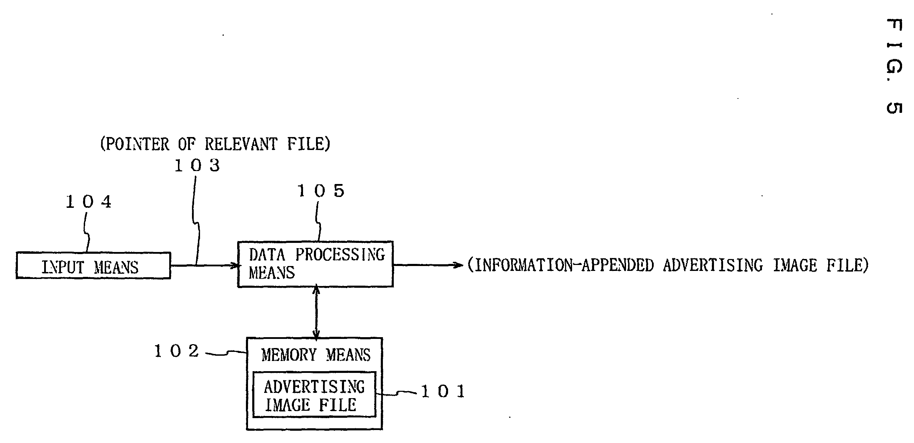

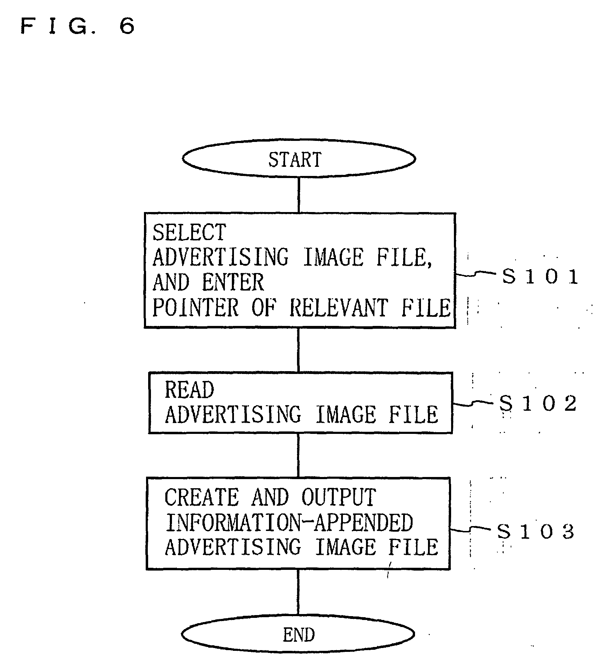

Next, an information-appended advertising image file creator in accordance with another embodiment of the present invention will be described in conjunction with Fig. 5 and Fig. 6.

An information-appended advertising image file creator shown in Fig. 5 includes a memory means 102, an input means 104, and a data processing means 105. An advertising image file 101 is stored in the memory means 102. The input means 104 is used to enter a pointer 103 of a file relevant to the advertisement. The data processing means 105 specifies the pointer 103 of the relevant file, which is entered at the input means 104, in the advertising image file 101.

The advertising image file 101 has a typical image file structure to which a filename with an extension of .jpg or .gif is assigned. The memory means 102 may be any memory means in which the advertising image file 101 can be stored. The pointer 103 of the relevant file specifies a location on a network at which the relevant file is stored as mentioned in conjunction with the aforesaid embodiment. The pointer may be expressed in any style compatible with a network concerned. The input means 104 is realized with, for example, a keyboard with which characters can be entered. The data processing means 105 includes a CPU and a RAM. For specifying the pointer 103 in the advertising image file 101, the pointer 103 may be specified in an available area within the advertising image file 101 in terms of a file structure. Alternatively, the pointer 103 may be specified using electronic watermark technologies or may be appended to the start or end of image data within the advertising image file 101 in terms of the file structure. One pointer or a plurality of pointers may be specified in the advertising image file while being compressed or encrypted.

Next, actions to be performed in the file creator will be described in conjunction with Fig. 6. The actions are performed when the CPU (computer) included in the data processing means 105 runs an information-appended advertising image file creation program. When the file creator is activated, the data processing means 105 first prompts a user to select an advertising image file at the input means 104 and to enter a pointer information of a relevant file (S101). For prompting a user to enter the pointer, for example, an input form is displayed on a display unit that is not shown so that the user can enter necessary items in the input form using the input means 104. The pathname of the advertising image file 101 in the memory means 102 and the filename of the advertising image file 101 are designated in order to select the advertising image file 101. When the advertising image file 101 has been selected and the pointer 103 of the relevant file has been entered, the data processing means 105 reads the advertising image file 101 from the memory means 102 into a work area in the RAM (S102). The data processing means 105 then specifies the pointer 103 of the relevant file in the advertising image file 101, and outputs the advertising image file 101 as an information-appended advertising image file to outside. The information-appended advertising image file may be stored in a file storage in a server or may be stored in a removable medium such as a CD-ROM or a floppy disk. In the latter case, the information-appended advertising image file may be distributed to users as an accessory of a magazine.

In the aforesaid embodiments, the advertising image transmission program 12, advertising image management program 8, and information-appended advertising image file creation program may be read from computer-readable recording media.

The present embodiment will be described below. Hereinafter, "Image Data Processing" is equivalent to the management program 8. Moreover, "a window 402 reserved by Image Data Processing" is equivalent to the management window 6.

### [Structure of an image file]

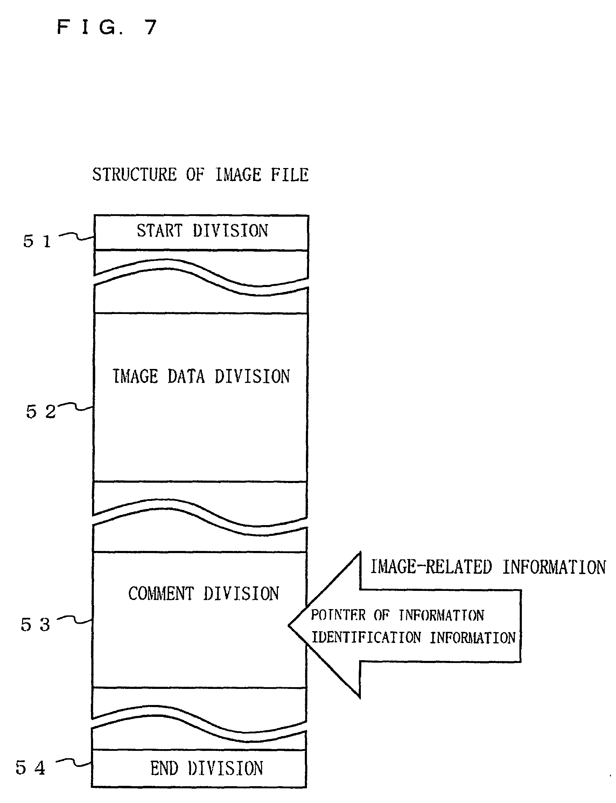

Fig. 7 shows an example of the data structure adopted for the image file treated in the above-described embodiment. The image file shown in Fig. 7 adopts a data structure composed of a start division 51, an image data division 52, a comment division 53, and an end division 54. The start division 51 indicates the start of a data stream. Data representing an image is specified in the image data division 52. Information that does not affect display of an image is specified in the comment division 53. The end division 54 indicates the end of the data stream. JPEG files or GIF files adopt this kind of data structure. The identification information to be added to the image data and pointer information that may be an URL are specified as information, which does not affect display of an image, in the comment division 53. Any other data structure will do as long as the data structure includes a division in which information that does not affect display of an image is specified. Moreover, the identification information inherent to an image file, one pointer or a plurality of pointers, an index to a menu item associated with the image file, or/and an entity of a program may be specified in the division in the image file of which contents are ignored in the process of displaying the image. Moreover, as mentioned previously, image data may be manipulated using digital watermark technologies.

Hereinafter, the identification information to be added to image data or pointer information shall be referred to as "image-related information." Moreover, an image file having the image-related information added to image data contained therein shall be referred to as an "information image file."

### [Structure of image-related information]

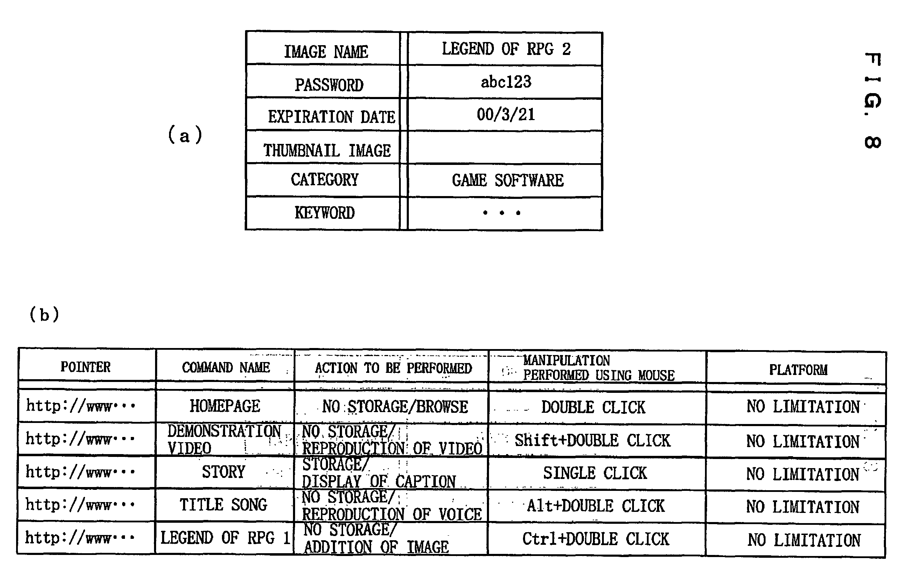

Fig. 8 shows the structure of image-related information. The image-related information shown in Fig. 8(a) contains an image name, a password, an expiration date, a thumbnail image, a category, and a keyword.

The "image name" is the name of a thumbnail image displayed in the window 402 reserved by Image Data Processing. The "password" is a password which a user is prompted to enter when an information image file is allocated to Image Data Processing. Only the user who knows the password can register the information image file with Image Data Processing. The "expiration date" is an expiration date of the information image file allocated to Image Data Processing. When the expiration date elapse, the information image file is deleted from the storage area in the hard disk drive 33. The "thumbnail image" is represented by image data contained in the image file and displayed as a thumbnail image in the window reserved by Image Data Processing. When an image contained in an information image file and displayed by a browser is moved to the window reserved by Image Data Processing, the thumbnail image is replaced with the image displayed by the browser. The "category" is data indicating a folder in which the information image file should be saved when allocated to Image Data Processing. When a designated folder does not exist, Image Data Processing creates a new folder having the designated name. The "keyword" is a word serving as a retrieval key based on which Image Data Processing retrieves the allocated information image file.

Image-related information shown in Fig. 8(b) has a structure that a command name, an action to be performed, a manipulation performed using a mouse (pointing device), and a platform are associated with each pointer.

The "pointer" indicates an address of a file in a local computer or on a network. For example, the pointer is a file name, a pathname, a universal naming convention (UNC), a uniform resource locator (URL), or uniform resource identifiers (URIs). The pathname indicates the location of a resource present in a local computer. The UNC indicates the location of a resource present in a network environment. The URL indicates the location of a resource present on the Internet or an intranet. The "command name" is a name adopted when the contents of a pointer are indicated as a menu item. For example, the command name may be Open Home Page or the like. What is referred to as a menu is a menu which is displayed on the display means 37 with a click of the right button of the mouse 39, and of which items are selectable. The "action to be performed" is an action to be performed by Image Data Processing. An action to be performed may be whether or not to store a file, which is located by a pointer added to an information image file, in the hard disk drive (memory means) 33 in the terminal 30 when the information image file is allocated to Image Data Processing. Otherwise, the action to be performed may be whether or not to automatically open the information image file or for what purpose the information image file is opened (in order to display a contained image as a caption, reproduce a video contained, or reproduce voice contained). The "manipulation performed using a mouse" is a manipulation performed using the mouse in order to acquire pointer information. Manipulations that can be set as the manipulation performed using a mouse include a double click, a press on the Shift key plus a double click, a press on the Ctrl key plus a double click, and a press on the Alt key plus a double clock. The "platform" is an environment (platform and operating system) compatible with a file located by a pointer. For example, when the OS 301 is the Windows™, Image Data Processing selects a pointer compatible with the Windows and indicates the pointer as an item of the menu.

### [Acquiring a pointer]

A description will be made of a procedure for acquiring a pointer specified in an information image file stored in the terminal 30.

### (1) Procedure based on selection of a menu item

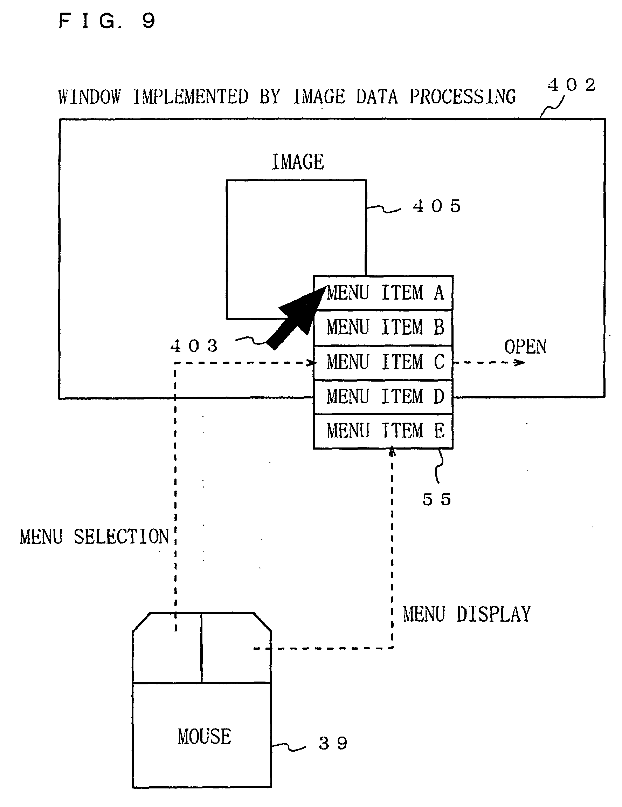

Fig. 9 is an explanatory diagram concerning a procedure for acquiring a pointer by selecting a menu item. A user manipulates the mouse 39 (pointing device) to superpose a mouse pointer 403 on an image 405 allocated to the window 402 reserved by Image Data Processing. Thereafter, the user clicks the right button on the mouse 39. The MPU 31 (information processing means) senses the click and reads image-related information (Fig. 8(b)) from an information image file containing the image 405 from memory means 33. The MPU 31 then produces menu display data. Specifically, the item of "command name" is selected as a title of a menu, and a menu 55 is displayed on the display means 37. Thereafter, the user manipulates the mouse 39 to move the mouse pointer 403 to a menu item the user wants to select. The user then clicks the left button on the mouse 39 to finalize selection of one menu item. The MPU 31 senses the click and references the image-related information (Fig. 8b). The MPU 31 then allocates a pointer, which is associated with the command name selected this time, to the browser 303, and accesses an address indicated by the pointer. After the MPU 31 receives a file from a server located at the accessed address, the MPU 31 opens the file according to an action to be performed which is associated with the selected command name. For example, RealPlayer™ is used to reproduce a video.

A title of a menu to be presented with a click of an image displayed in the window 402 reserved by Image Data Processing depends on the contents of image-related information embedded in the information image file. Moreover, the information image file containing the image-related information is transmitted from the server 20. A title of a menu to be presented with a mouse click is determined with information downloaded from the server 20.

### (2) Procedure based on a manipulation performed using a mouse

When the button on the mouse 39 or any key on the keyboard 38 is manipulated with the window 402 reserved by Image Data Processing selected, a predetermined pointer can be accessed responsively to the manipulation. When the mouse 39 or keyboard 38 is manipulated, the MPU 31 references image-related information to check the item "manipulation performed using a mouse" (Fig. 8(b)), and thus judges whether the actually performed manipulation is defined. If the manipulation is defined, a pointer associated with the manipulation is read and allocated to the browser 2. Consequently, an address indicated with the pointer is accessed. After the MPU 31 receives a file from a server located at the accessed address, the MPU 31 opens the file according to an action to be performed that is associated with a command name selected this time. Herein, the same manipulation performed using the mouse may be associated with a plurality of actions to be performed.

### [Example of an action to be performed after access to an address indicated by a pointer]

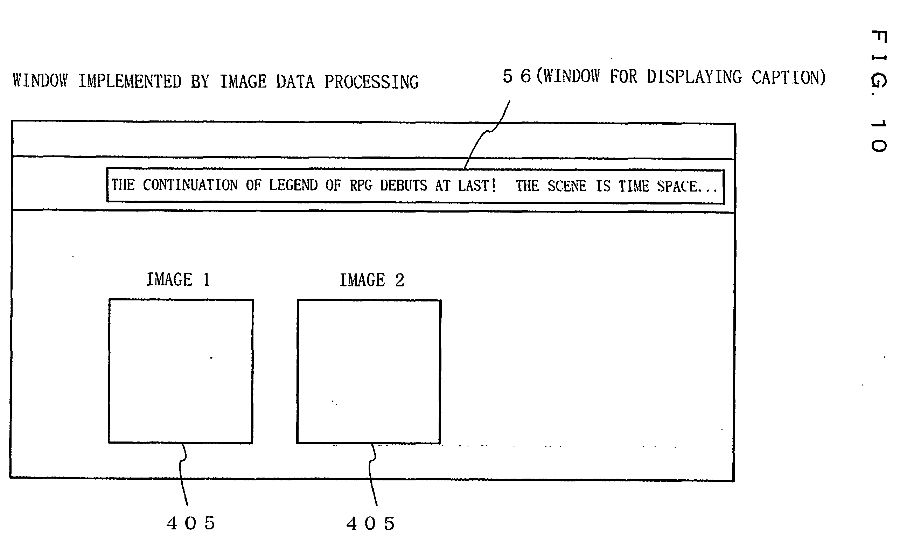

Next, a description will be made of an example of an action to be performed after access to an address indicated by a pointer. An example of specifying "displaying a caption" as an action to be performed, which is shown in Fig. 8(b), will be described below. Fig. 10 is an explanatory diagram concerning an action of displaying a caption. For specifying "displaying a caption" as an action to be performed in an information image file, an associated pointer information should indicate an address at which a text file containing a caption is stored. Storing the text file in a local disk during downloading of the information image file is also specified as an action to be performed. An action of displaying a caption displaying (control code) is then specified as an action to be performed. A single click of the left button is specified as a manipulation performed using a mouse. The above specification is normally achieved by an information image provider at a server.

The information image file containing the image-related information is allocated from the browser 303 to Image Data Processing in the terminal 30. The MPU 31 then references the image-related information and starts accessing an address indicated by a pointer associated with "storage". The MPU 31 downloads a text file of a caption from a server located by the pointer, and stores the text file in the local hard disk drive 33.

Thereafter, a user manipulates the mouse 39 to click an image displayed in the window 402 reserved by Image Data Processing, and thus selects the image. The MPU 31 references image-related information concerning the selected image, and finds that the control code "displaying a caption" is specified as an action to be performed. The MPU 31 then displays, as shown in Fig. 10, an elongated window for displaying a caption within (or outside) the window reserved by Image Data Processing. The text of a caption read from the hard disk drive 33 is displayed in the window in a scroll mode. As shown in Fig. 10, when a plurality of images 405 is displayed, a different caption may be displayed depending on which of the images is selected using the mouse 39.

### [Allocating an information image file to Image Data Processing]

In the present embodiment, an information image file is allocated to Image Data Processing by dragging and dropping the file from the window 401 reserved by the browser to the window 402 reserved by Image Data Processing. Another allocating procedures will be described below.

### (1) Drag and drop from a menu

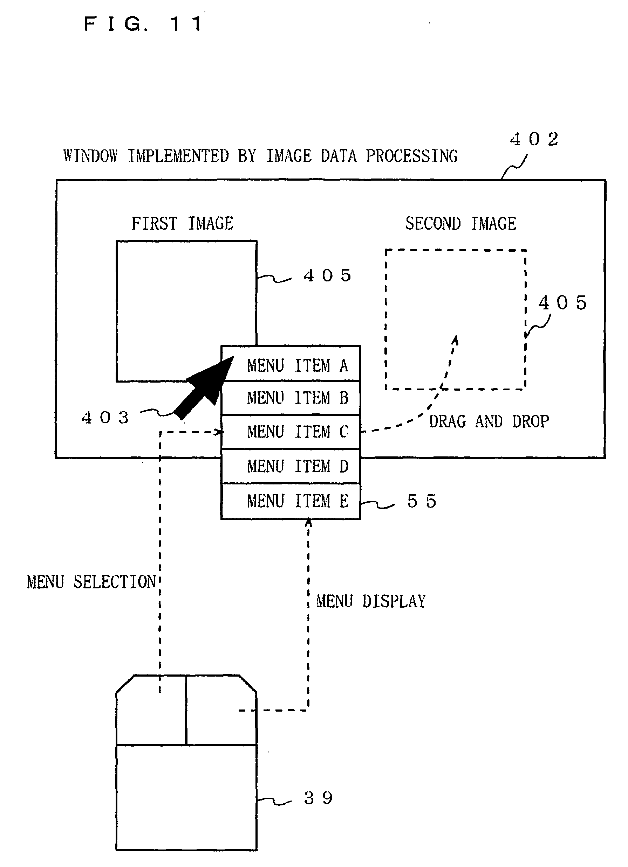

Fig. 11 is an explanatory diagram concerning a drag and drop from a menu. As already described, the menu 55 (first management field) is displayed by clicking the right button on the mouse 39, and a menu item "addition of an information image" is selected using the mouse 39. The menu item of addition of an information is associated with a control code dedicated to addition of an image that is specified as an action to be performed as shown in the lowest line in Fig. 8(b). A user manipulates the mouse 39 to drag and drop the menu item of addition of an information image into the window 402 (second management field) reserved by Image Data Processing. The MPU 31 senses the manipulation and references image-related information (Fig. 8(b)). The MPU 31 checks if any control code indicating an action to be performed is associated with the designated menu item. When the MPU 31 finds the control code of "addition of an image", the MPU 31 starts accessing an address indicated by a pointer associated with the control code. A new information image file is then downloaded from a predetermined server located at the accessed address. The MPU 31 then allocates the information image file from the browser 303 to Image Data Processing. Moreover, the MPU 31 allocates the newly downloaded information image file to Image Data Processing.

The foregoing procedure has the merit of obviating the necessity of starting up the browser every time of allocating a new information image file.

Merely by clicking the menu item of addition of an information image using the mouse 39, a new information image file may be downloaded and allocated to Image Data Processing.

Moreover, the new information image files may be contained in an already allocated information image file. In this case, when the menu item of addition of an information image (first management field) is dragged and dropped, the MPU 31 references image-related information of an image concerned contained in the information image file instead of accessing a server on a network. The MPU 31 then reads another information image file contained in advance in the information image file, and allocates the read information image file to Image Data Processing (second management field).

In this case, advantageously, a server on a network need not be accessed at every time of allocating a new information file.

### (2) Drag and drop from mailing software

An information image file appended to mailing software may be dragged and dropped into the window 402 reserved by Image Data Processing in order to allocate the information image file to Image Data Processing. A window for viewing the text of a mail or a window for checking presence of an appended file is used as the first management field. In this case, an information image file is distributed by electronic mail so that it will benefit received persons. Information can be spread effectively.

### (3) Drag and drop from any folder

The information image file copied from a browser or mailing software into a predetermined folder may be dragged and dropped from the folder (first management field) to the window 402 (second management field) reserved by Image Data Processing. The MPU 31 senses the drag and drop from the folder to the window 402 reserved by Image Data Processing, and allocates the information image file to Image Data Processing in the same manner as it does when an information image file is dragged and dropped from the browser.

### (4) Allocating procedure independent of a drag and drop

Allocating an information image file to Image Data Processing may be achieved by replacing a drag and drop with another manipulation. For example, the MPU 31 may sense that an information image file managed outside Image Data Processing is clicked and selected, and allocate the information image file to Image Data Processing. After an information image file managed outside Image Data Processing is copied into a clipboard, the information image file is pasted to the window 402 reserved by Image Data Processing. At this time, the MPU 31 may sense the pasting and allocate the information image file to Image Data Processing.

### (5) Allocation from a recording medium such as a CD-ROM

An information image file may be allocated from a computer-readable recording medium such as a CD-ROM. In this case, the information image file saved in a folder (first management field) in the CD-ROM may be allocated to Image Data Processing (second management field) by performing a drag and drop, a click, a copy and pasting, or the like. When the CD-ROM is set up, an installer may be activated automatically so that the installer will allocate the information image file recorded in the CD-ROM to Image Data Processing. For allocating the information image file, the installer may identify information image files that have already been allocated to Image Data Processing so that the installer can allocate only an unallocated information image file to Image Data Processing.

The foregoing procedure enables circulation of an information image file as an appendix of a magazine. Consequently, the information image file can be distributed to an unspecified number of users and benefit them.

### [Structures of the first and second management fields]

The first and second management fields may be defined as the independent windows (process, program) as shown in Fig. 2. The first and second management fields may be defined in any other form. Some examples will be described below.

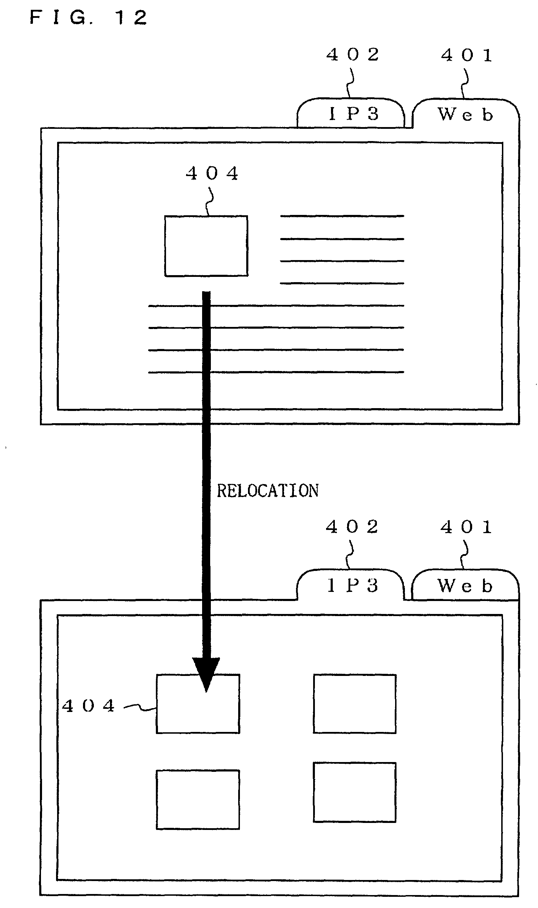

Fig. 12 shows an example of displaying a window on the screen. Specifically, the window 401 reserved by a Web browser and the window 402 reserved by Image Data Processing are defined by a single program. The input means 35 is manipulated in order to select a display selector tab projecting from the upper side of each window. A selected window is displayed on the screen. To be more specific, first, an information image file 404 displayed in the window 401 reserved by the Web browser is accessed and relocated into the window 402 reserved by Image Data Processing. Any of the procedures described previously can be adopted for allocating the information image file 404. Thereafter, the input means 35 is used to select a display selector tab and to thus display the window 402 reserved by Image Data Processing. Consequently, the information image file relocated into the window 402 reserved by Image Data Processing can now be accessed.

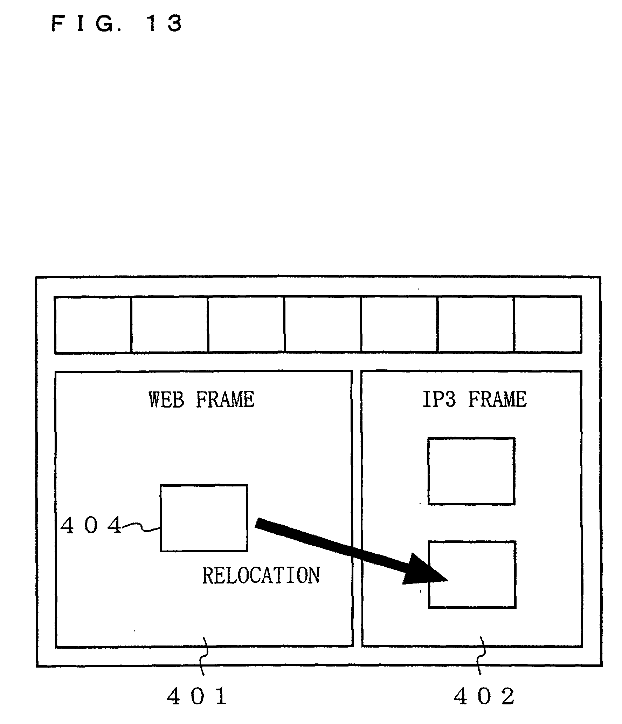

Referring to Fig. 13, a display window has a frame structure. One frame is displayed as the window 401 reserved by a Web browser, and another frame is displayed as the window 402 reserved by Image Data Processing at the same time. In this case, the information image file 404 may be dragged and dropped from the window 401 reserved by the Web browser to the window reserved by Image Data Processing. This allocating procedure is easy to do. Any other procedure may be adopted to allocate the information image file to Image Data Procedure.

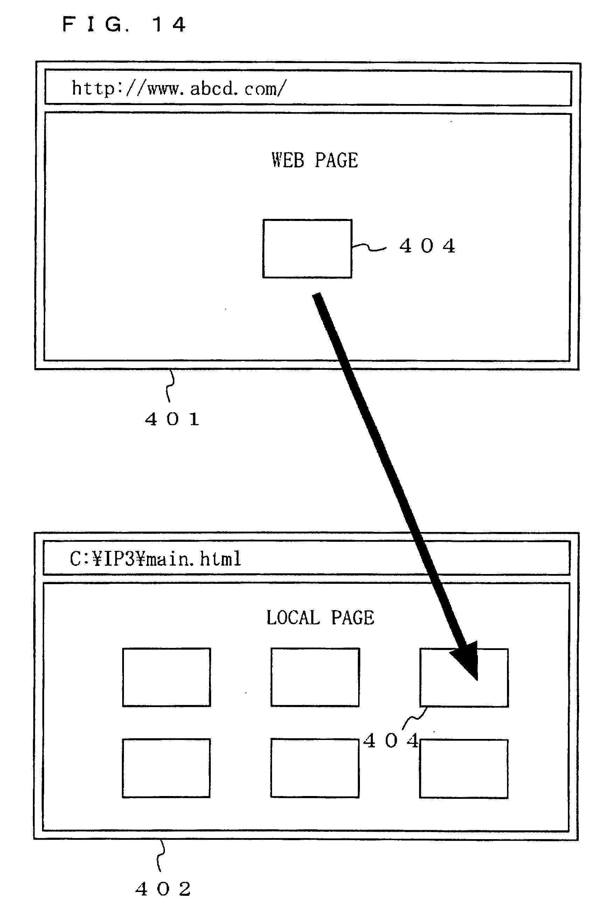

Referring to Fig. 14, when the information image file 404 displayed in the window 401 reserved by a Web browser is accessed, the processing means 31 activates a plug-in organized in advance under the Web browser. Any of the aforesaid procedures can be adopted for allocating the information image file. The activated plug-in adds a feature of managing a new information image file which stored in advance in the memory means 33 and used to define the second management field. The resultant local HTML file is developed in the Web browser to define the second management field 402. For developing the local HTML file in the Web browser, the Web browser may be any existing one. Alternatively, a new Web browser may be activated and used exclusively for development.

### [Encrypting image-related information]

Next, a description will be made of encryption of image-related information to be appended to image data.

### (Encryption by a server)

The server 20 has a feature of encrypting image-related information to be appended to image data. An encryption algorithm is updated at predetermined intervals. By encrypting image-related information, the image-related information can be protected from being illegally added or deleted to or from an image file, or altered by a third party.

### (Decoding by a terminal)

For referencing image-related information appended to image data, the MPU 31 in the terminal 30 decodes the image-related information. A decoding algorithm compatible with the encryption algorithm implemented in the server 20 is stored in advance in the hard disk drive 33. However, since the encryption algorithm in the server 20 is updated at predetermined intervals, the decoding algorithm in the terminal 30 should be updated to become compatible with the updated encryption algorithm.

### (Updating the decoding algorithm)

The server 20 uses a database to manage the versions of the decoding algorithms stored in the terminals 30 in association with identification numbers (IP address) assigned to the terminals. When the server 20 updates the encryption algorithm used to encrypt image-related information, the server 20 sets flags specified in the identification numbers of all the terminals. When a terminal accesses the server 20 thereafter, if the flag specified in the identification number of the terminal is set, a decoding algorithm compatible with a new encryption algorithm is transmitted to the terminal in order to update the old decoding algorithm in the terminal. Thereafter, the flag specified in the identification number of the terminal whose decoding algorithm has been updated is reset. The decoding algorithm is stored in the hard disk drive 23 in the server.

Image Data Processing has a feature of attempting to decode image-related information contained in an information image file to be allocated to Image Data Processing, and checking if the resultant image-related information has a normal data structure. If the data structure is abnormal, the allocation of the information image file is disabled. Consequently, allocation of an illegally altered information image file can be prevented. Moreover, whether an information image file is illegal may be judged from identification information appended to image data.

Finally, when the image-related information is embedded in an information image file (icon), the information image file is packed and represented with an icon. Java™ applets and ActiveX™ controls may be used to produce a packed information image file. Both the Java™ applet and ActiveX™ control are programs that can be run by browser software such as Netscape Navigator™ or Microsoft Internet Explorer™. The Java™ applet is described according to a Java intermediate code, while the ActiveX™ control is described according to a native code of a CPU. Both the Java™ applet and ActiveX™ control can be run by browsers. Graphic indications of Java™ applets or ActiveX™ controls are displayed in a display field reserved by a browser. When the Java™ applet or ActiveX™ control is used, an applet is needed to display a mere image on behalf of an icon that represents the embedded relevant information. Instead of using a tag <IMG> to display an icon in a browser, a tag <EMBED> or <APPLET> should be used to run the applet. Embedding relevant information may be executed as program run in either case.

### Industrial Applicability

According to the present invention having the aforesaid constituent features, a pointer of a relevant file is contained in the advertising image file, and a higher value-added advertising image is provided for users. Consequently, the users can easily access the diverse information originated from the advertisers, and the advertisers can in turn put highly effective advertisements. There are thus provided an unprecedentedly excellent network advertisement method and system and so on.

## Claims

1. A network advertisement method to be implemented in an advertisement system constructed by interconnecting over a network a server, which transmits an advertising image file, and a terminal, which receives the advertising image file sent from the server and presents the advertising image file to a user, so that the server and terminal can communicate with each other, wherein:
the advertising image file is an information-appended advertising image file that contains in advance one pointer or a plurality of pointers with which a file or files relevant to the advertisement can be located;
when the information-appended advertising image file is accessed after stored in a local file storage in said terminal, a request for transmission of the relevant file is issued to an address indicated by the pointer of the relevant file contained in the information-appended advertising image file; and
the relevant file transmitted to said terminal in response to the request is opened by said terminal.

2. A network advertisement system constructed by interconnecting over a network a server, which transmits an advertising image file, and a terminal, which receives the advertising image file sent from the server and presents the advertising image file to a user, so that the server and terminal can communicate with each other, wherein:
the advertising image file is an information-appended advertising image file that contains in advance one pointer or a plurality of pointers with which a file or files relevant to the advertisement can be located,
said network advertisement system comprising:
a relevant file requesting means for sensing that the information-appended advertising image file is accessed after stored in a local file storage in said terminal, and issuing a request for transmission of the relevant file to an address indicated by the pointer of the relevant file contained in the information-appended advertising image file; and
a relevant file opening means for opening the relevant file, which is transmitted to said terminal in response to the request, within said terminal.

3. A server comprising an advertising image transmitting means that transmits an advertising image file in response to a request issued from a terminal, wherein:
said advertising image transmitting means transmits an information-appended advertising image file, which contains in advance one pointer or a plurality of pointers with which a file or files relevant to the advertisement can be located, as the advertising image file; and
said relevant file or files comprise information with which the advertiser desires to provide a user of said terminal, materialized into the form of a file.

4. A computer-readable medium in which an advertising image transmission program for transmitting an advertising image file in response to a request issued from a terminal is recorded, wherein:
the program instructs a computer to transmit an information-appended advertising image file, which contains in advance one pointer or a plurality of pointers with which a file or files relevant to the advertisement can be located, as the advertising image file; and
said relevant file or files comprise information with which the advertiser desires to provide a user of said terminal, materialized into the form of a file.

5. A terminal for presenting an advertising image file to a user, the advertising image file being an information-appended advertising image file that contains in advance one pointer or a plurality of pointers with which a file or files relevant to the advertisement can be located, said terminal comprising:
a relevant file requesting means for sensing that the information-appended advertising image file is accessed after stored in a local file storage in said terminal, and issuing a request for transmission of the relevant file to an address indicated by the pointer of the relevant file contained in the information-appended advertising image file; and
a relevant file opening means for opening the relevant file, which is transmitted to said terminal in response to the request, within said terminal.

6. A medium adapted to a terminal that presents an advertising image file to a user, and having an advertising image management program recorded therein, wherein:
the advertising image management program instructs a computer to sense that the information-appended advertising image file is accessed after stored in a local file storage in said terminal, and to issue a request for transmission of the relevant file to an address indicated by the pointer of the relevant file contained in the information-appended advertising image file.

7. An advertising image file creator comprising:
a memory means in which an advertising image file is stored;
an input means for use in entering a pointer of a file relevant to the advertisement; and
a data processing means for specifying the pointer of the relevant file, which is entered at said input means, in the advertising image file.

8. A medium adapted to an advertising image file creator that comprises a memory means in which an advertising image file is stored and an input means used to enter a pointer of a file relevant to the advertisement, said medium having an information-appended advertising image file creation program recorded therein, wherein:
the information-appended advertising image file creation program instructs a computer to execute data processing of specifying the pointer of the relevant file, which is entered at said input means, in the advertising image file.

## Amended claims

### Amended claims under Art. 19.1 PCT

**3.** (AMENDED) A server comprising an advertising image transmitting means that transmits an advertising image file in response to a request issued from a terminal, wherein:
said advertising image transmitting means transmits an information-appended advertising image file, which contains in advance one pointer or a plurality of pointers with which a file or files relevant to the advertisement can be located, as the advertising image file; and
said relevant file or files comprise information with which the advertiser desires to provide a user of said terminal, materialized into the form of a file.

**4.** (AMENDED) A computer-readable medium in which an advertising image transmission program for transmitting an advertising image file in response to a request issued from a terminal is recorded, wherein:
the program instructs a computer to transmit an information-appended advertising image file, which contains in advance one pointer or a plurality of pointers with which a file or files relevant to the advertisement can be located, as the advertising image file; and
said relevant file or files comprise information with which the advertiser desires to provide a user of said terminal, materialized into the form of a file.
Specification, pages 7 and 8 (Disclosure of Invention)
**3.** According to still another aspect of the present invention, there is provided a server having an advertising image transmitting means that transmits an advertising image file in response to a request issued from a terminal. The advertising image transmitting means transmits an information-appended image file that contains in advance one pointer or a plurality of pointers, with which a file or files relevant to the advertisement can be located, as an advertising image file. The relevant file or files comprise information with which the advertiser desires to provide a user of the terminal, materialized into the form of a file.
**4.** According to still another aspect of the present invention, there is provided a computer-readable medium in which an advertising image transmission program is recorded. The advertising image transmission program instructs a computer to transmit an advertising image file in response to a request issued from a terminal. In other words, the program instruct a computer to transmit an information-appended advertising image file as the advertising image file. The information-appended advertising image file contains in advance one pointer or a plurality of pointers with which a file or files relevant to the advertisement can be located. The relevant file or files comprise information with which the advertiser desires to provide a user of the terminal, materialized into the form of a file.
